(19) Europäisches Patentamt / European Patent Office / Office européen des brevets

(11) **EP 2 446 360 B1**

(12) **FASCICULE DE BREVET EUROPEEN**

(45) Date de publication et mention de la délivrance du brevet:
**19.05.2021 Bulletin 2021/20**

(21) Numéro de dépôt: **10734511.8**

(22) Date de dépôt: **17.06.2010**

(51) Int Cl.:
*G06F 9/50* *(2006.01)*   *H04L 29/08* *(2006.01)*

(86) Numéro de dépôt international:
**PCT/FR2010/051211**

(87) Numéro de publication internationale:
**WO 2010/149898 (29.12.2010 Gazette 2010/52)**

(54) **TECHNIQUE DE DETERMINATION D'UNE CHAINE DE FONCTIONS ELEMENTAIRES ASSOCIEE A UN SERVICE**

VERFAHREN ZUR BESTIMMUNG EINER MIT EINEM DIENST ASSOZIIERTEN REIHE AN GRUNDFUNKTIONEN

TECHNIQUE FOR DETERMINING A CHAIN OF BASIC FUNCTIONS ASSOCIATED WITH A SERVICE

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **22.06.2009 FR 0954216**

(43) Date de publication de la demande:
**02.05.2012 Bulletin 2012/18**

(73) Titulaire: **ORANGE**
**75015 Paris (FR)**

(72) Inventeurs:
• **RADIER, Benoît**
**F-22700 Perros Guirec (FR)**
• **SALAUN, Mikaël**
**F-29590 Rosnoen (FR)**
• **KLENK, Andreas**
**71088 Holzgerlingen (DE)**
• **KLEIS, Michael**
**10963 Berlin (DE)**

(56) Documents cités:
• **CHAN A T S ET AL: "MobiPADS: a reflective middleware for context-aware mobile computing" IEEE TRANSACTIONS ON SOFTWARE ENGINEERING, IEEE SERVICE CENTER, LOS ALAMITOS, CA, US, vol. 29, no. 12, 1 décembre 2003 (2003-12-01), pages 1072-1085, XP011107055 ISSN: 0098-5589**
• **MICHAEL KLEIS ET AL: "CSP, Cooperative Service Provisioning Using Peer-to-Peer Principles" SELF-ORGANIZING SYSTEMS; [LECTURE NOTES IN COMPUTER SCIENCE], SPRINGER BERLIN HEIDELBERG, BERLIN, HEIDELBERG, vol. 4725, 11 septembre 2007 (2007-09-11), pages 73-87, XP019100161 ISBN: 978-3-540-74916-5**

**Description**

L'invention se situe dans le domaine des télécommunications et concerne notamment une technique de détermination d'une chaîne de fonctions élémentaires associée à un service.

Dans un réseau de communication, plusieurs nœuds peuvent former un réseau de recouvrement et être ainsi connectés entre eux. Il s'agit par exemple d'un réseau de recouvrement de type "pair-à-pair", "peer to peer" en anglais, appelé par la suite réseau P2P. Dans un tel réseau de recouvrement, les nœuds, appelés pairs, sont indifférenciés et possèdent des capacités et des responsabilités équivalentes dans le réseau contrairement à une architecture de type client-serveur. Ce réseau de recouvrement ne s'appuie pas sur une infrastructure propre mais sur un ou plusieurs réseaux de communication déjà en place. Il en exploite les ressources mais sans en connaître nécessairement la topologie physique de ce ou ces réseaux sous-jacents. Un réseau de communication est dit sous-jacent au réseau de recouvrement.

Le document CHAN A T S ET AL: "MobiPADS: a reflective middleware for context-aware mobile computing", IEEE TRANSACTIONS ON SOFTWARE ENGINEERING (1 décembre 2003) décrit un système de reconfiguration dynamique de service en fonction de changements dans un contexte d'exécution. Le service est décomposé en une chaîne esclave de fonctions élémentaires mise en œuvre dans un client et à cette chaîne est associée une chaîne dans un serveur.

L'article intitulé "Towards Autonomie Service Control In Next Generation Networks" de A. Klenk et al. et publié à la conférence ICAS08 propose une méthode permettant d'introduire de façon autonome un service dans le réseau de recouvrement. Dans une première phase, un opérateur désireux d'offrir un accès au service et un fournisseur du service négocient, préalablement à la réception d'une première demande de mise en œuvre du service, un contrat comportant au moins une contrainte pour la mise en œuvre du service, appelé "Multimedia Transport Service Agreement", par exemple une contrainte de qualité de service. Cette première phase de négociation permet de décomposer une demande de service en une chaîne de fonctions élémentaires. Par exemple, de telles fonctions sont une fonction de transcodage de flux vidéo, une fonction de correction d'erreurs, une fonction de marquage en filigrane ou "watermarking",... Dans une deuxième phase, mise en œuvre lorsqu'une requête d'accès au service est reçue en provenance d'une entité cliente, des nœuds disposant des modules de traitement nécessaires à la mise en œuvre des fonctions élémentaires sont alors déterminés. Puis, en fonction du résultat de cette détermination, les interconnexions nécessaires entre les modules de traitement sont à leur tour déterminées en prenant en compte d'une part, la ou les contraintes pour la mise en œuvre du service prévue(s) dans le contrat et d'autre part, les coûts de mise en œuvre du service. Dans une troisième phase, le service est fourni à l'entité cliente en utilisant les connexions entre les modules de traitement établies lors de la deuxième phase.

Une fois la première phase de négociation terminée, la chaîne de fonctions élémentaires associée au service est figée et ne peut plus être modifiée. Ainsi, une entité cliente demandant un accès au service risque de se le voir refuser en raison d'une incompatibilité entre ses propres contraintes de qualité de service et celles requises pour la mise en œuvre du service. Pour accueillir des entités clientes présentant des contraintes de qualité de service différentes, il est alors nécessaire de prévoir pour chaque contrainte de qualité de service possible, une chaîne distincte de fonctions élémentaires. De plus, l'entité cliente peut lui-même faire une erreur lors de la sélection du service correspondant à ses propres contraintes de qualité de service. Le service ne peut alors être rendu.

Un des buts de l'invention est de remédier à des insuffisances/inconvénients de l'état de la technique et/ou d'y apporter des améliorations.

Selon un premier aspect, l'invention a pour objet un procédé de détermination suivant la revendication 1.

Pour mettre en œuvre le service vers l'entité cliente, il est nécessaire de déterminer une chaîne de fonctions élémentaires. Par fonction élémentaire, on entend par exemple une fonction de transcodage, de comptage, d'interception légale, de marquage par filigrane, .. Une telle fonction élémentaire est décrite par des paramètres d'entrée, une fonction, des paramètres de sortie. La chaîne de fonctions élémentaires représente alors un enchaînement de traitements à mettre en œuvre à partir d'un dispositif mettant en œuvre le service présentant certains paramètres de sortie vers une entité cliente présentant certains paramètres d'entrée. Etant donné que la chaîne provisoire, préalablement définie lors de la phase de négociation du contrat, est adaptée grâce au procédé selon l'invention en fonction d'un contexte associé à l'entité cliente, une seule phase de négociation entre le fournisseur du réseau de communication et le fournisseur de service est alors nécessaire. L'entité cliente ne doit plus alors sélectionner par elle-même un identifiant de service adapté à ses besoins. L'adaptation à ses besoins s'effectue de façon autonome dans le réseau. Les risques d'erreur de l'entité client sont ainsi limités. L'administration des différents services est également simplifiée, une seule phase de négociation prenant place. Ainsi, il est possible de fournir à chaque entité cliente un accès adapté au service de façon autonome.

Selon une caractéristique particulière, cette action à effectuer appartient au groupe comprenant au moins une suppression, un ajout, un remplacement.

Lors de l'adaptation, il peut s'agir d'ajouter une fonction élémentaire dans la chaîne provisoire. Par exemple, si les capacités de l'entité cliente ne sont pas compatibles avec un service vidéo, il est possible d'ajouter une fonction de transcodage dans la chaîne provisoire. Lors de la deuxième phase, un élément du réseau de communication proposant cette fonction de transcodage est alors sélectionné et participe à la fourniture du service vers l'entité cliente lors de la troisième phase de mise en œuvre du service.

Il peut également s'agir de supprimer une fonction élémentaire dans la chaîne provisoire. Par exemple, une fonction de comptage a été prévue dans la chaîne provisoire mais n'est pas nécessaire pour cette entité cliente lorsqu'elle accède par un accès de type ADSL ou bien lorsque cet accès se situe pendant une première période d'utilisation.

Il peut encore s'agir de modifier une fonction élémentaire dans la chaîne provisoire. Par exemple, une fonction de transcodage a été prévue mais doit être modifiée en fonction d'une heure d'accès au service.

Selon une autre caractéristique particulière, le contexte associé à l'entité cliente appartient au groupe comprenant au moins un identifiant de l'utilisateur de l'entité cliente, un type de réseau d'accès, un type de terminal.

L'identifiant de l'utilisateur peut être pris en compte par exemple pour insérer une fonction d'interception légale dans la chaîne provisoire.

Le type de réseau d'accès peut être obtenu par interrogation d'un serveur de sessions d'accès réseau ou CLF, pour « Connectivity Session Location and Repository Function ». Les informations mémorisées par ce serveur peuvent être ainsi utilisées pour adapter la chaîne de fonctions élémentaires.

Le type de terminal peut être transmis dans la requête d'accès au service. Il est alors possible d'adapter la chaîne de fonctions élémentaires en fonction de caractéristiques intrinsèques du terminal.

Selon une autre caractéristique particulière, le procédé comprend en outre une étape de contrôle d'une autorisation d'accès audit service par ladite entité cliente, l'étape de mise en œuvre de l'action déterminée étant exécutée lorsque l'entité cliente est autorisée à accéder au service.

Le contrôle d'accès prenant place avant l'étape de mise en œuvre de l'action déterminée, le procédé peut être arrêté lorsque l'entité cliente n'est pas autorisée à accéder au service. Ceci évite ainsi de reporter la décision, une fois les ressources réservées dans le réseau.

Selon une autre caractéristique particulière, le procédé comprend également une étape d'obtention d'au moins une règle relative au contexte associé à l'entité cliente et dans lequel l'action à effectuer sur la chaîne provisoire est également déterminée en fonction de ladite règle.

Il est possible de mémoriser dans une base de données des règles relatives à des contextes associés à des entités clientes. Il s'agit par exemple de règles à appliquer aux différentes entités clientes, de règles dépendant de l'opérateur du réseau de communication, de règles dépendant du service. Ainsi, le dispositif de détermination interroge cette base de données pour obtenir des règles à appliquer pour le contexte associé à cette entité cliente.

Selon un deuxième aspect, l'invention a pour objet un dispositif de détermination suivant la revendication 5.

Selon une caractéristique particulière, le nœud d'accès à un service du dispositif de détermination comprend en outre

- des moyens de réception en provenance d'une entité cliente d'une requête d'accès au service, ladite requête comprenant un contexte associé à l'entité cliente ;
- des moyens d'obtention d'une chaîne provisoire de fonctions élémentaires associée audit service ;
- des moyens d'envoi à un dispositif de détermination d'une chaîne de fonctions élémentaires d'une chaîne provisoire de fonctions élémentaires associée au service et d'un contexte associé à l'entité cliente ;
- des moyens de réception dudit dispositif d'une chaîne définitive de fonctions élémentaires.

Selon un quatrième aspect, l'invention a pour objet un système de traitement d'une requête d'accès à un service par une entité cliente comprenant au moins un nœud d'accès à un service et un dispositif de détermination d'une chaîne de fonctions élémentaires associée à un service tels que décrits précédemment.

Selon un cinquième aspect, l'invention a pour objet un programme d'ordinateur comportant des instructions pour la mise en œuvre du procédé de détermination d'une chaîne de fonctions élémentaires associée à un service tel que décrit précédemment par un dispositif de détermination, lorsque ce programme est exécuté par un processeur.

L'invention sera mieux comprise à l'aide de la description suivante d'un mode de réalisation particulier du procédé de l'invention, en référence aux dessins annexés sur lesquels :

- la figure 1 représente un système de traitement d'une requête d'accès à un service dans son environnement selon un mode particulier de réalisation de l'invention ;
- la figure 2 représente les étapes du procédé selon un mode particulier de réalisation de l'invention ;
- la figure 3 représente un dispositif de détermination d'une chaîne de fonctions élémentaires associée à un service selon un mode particulier de réalisation de l'invention ;
- la figure 4 représente un nœud d'accès à un service selon un mode particulier de réalisation de l'invention.

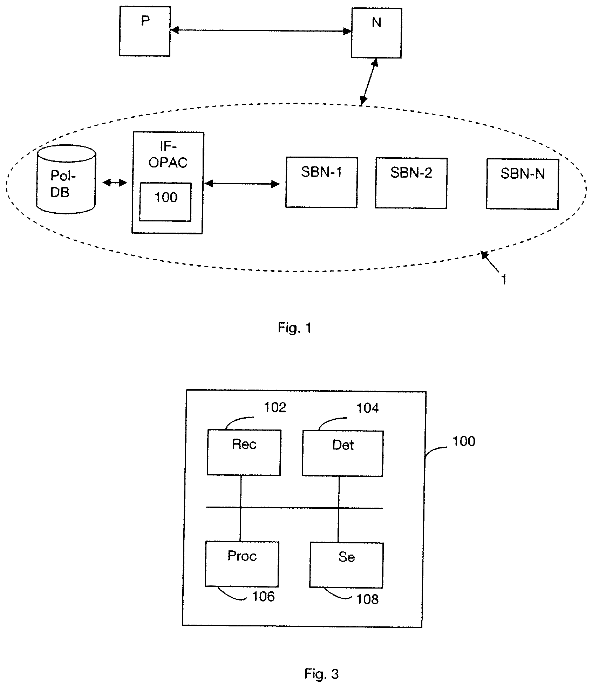

Un système 1 de traitement d'une requête d'accès à un service dans un réseau de communication est représenté de façon schématique sur la figure 1. Le système 1 comprend une pluralité de nœuds d'accès au service, SBN-1, ..., SBN-N, pour « Service Bootstrap Node ». Un terminal N est représenté également sur la figure 1. Par la suite, on appelle entité cliente le terminal N ou l'utilisateur U de ce terminal N. Selon l'invention, le système 1 comprend également une entité de contrôle d'accès, noté IF-OPAC, pour « Interface Overlay Proxy Access Control », administrée par l'opérateur permettant un accès au service. Cette entité de contrôle d'accès IF-OPAC comprend notamment un dispositif 100 de détermination d'une chaîne de fonctions élémentaires. L'entité de contrôle d'accès IF-OPAC est agencée pour interroger une base de données Pol-DB, mémorisant des règles relatives aux entités clientes, des règles associées à l'opérateur du réseau de communication, des règles associées au service. Ces règles peuvent être mémorisées dans une seule base de données ou bien dans des bases de données distinctes. Une règle relative à une entité cliente est par exemple un ajout d'une fonction élémentaire conditionnellement à un type d'accès. Une règle relative au service permet de préciser les conditions d'accès au service, notamment qui est autorisé à accéder au service, quand peut-on accéder au service, d'où est-il possible d'accéder aux services, quels utilisateurs sont autorisés. Une règle associée à l'opérateur du réseau de communication permet de préciser des conditions d'accès aux ressources du réseau.. Il peut s'agir par exemple d'un débit maximum autorisé dans le réseau de communication différent en fonction de l'utilisateur, d'un instant d'accès au service. Toujours à titre d'exemples non limitatifs, l'accès aux ressources du réseau de communication n'est disponible qu'aux utilisateurs de ce réseau, le réseau d'accès utilisé par l'entité cliente n'accepte pas des entités clientes nomades, les ressources disponibles pour les utilisateurs nomades sont limitées à certains débits dans le sens descendant ou le sens montant après mise en œuvre d'une procédure d'authentification alors que les utilisateurs non nomades ne sont pas limités,...

Un portail P est également représenté et mémorise pour un service S donné, un identifiant du service SID et des adresses de nœuds d'accès au service SBN.

Pour permettre à l'entité cliente d'accéder au service S, une chaîne de fonctions élémentaires TSID doit être déterminée. Selon l'article intitulé "Towards Autonomie Service Control In Next Generation Networks" de A. Klenk et al. et publié à la conférence ICAS08, cette

chaîne de fonctions élémentaires est définie lors de la phase de négociation entre le fournisseur de service et le fournisseur du réseau de communication. A l'issue de la phase de négociation, le service est défini par :

- un identifiant de service unique SID ;
- un ensemble de fonctions élémentaires de traitement des données $P_{SID}$ ;
- un ensemble de contraintes associées au service $C_{SID}$. Ces contraintes comprennent des paramètres associés au service et des autorisations d'accès au service. Les paramètres associés au service sont par exemple le lieu d'accès, l'instant d'accès, la manière d'accéder et des paramètres de qualité de service, tels qu'un coût maximum acceptable, un retard maximum acceptable, une bande passante requise, ... Les contraintes peuvent également être spécifiées entre les éléments de la chaine de traitement.

Cet ensemble d'informations, définissant le service identifié par l'identifiant de service SID, est appelé par la suite modèle de chaîne de traitement ou « Processing Chain Template ». Il s'agit d'une chaîne ordonnée de fonctions $P_i$ élémentaires.

Une fonction élémentaire de traitement de données est représentée sous la forme d'un triplet (I,P,O) où I représente des formats d'entrée que la fonction de traitement P peut traiter et O représente le format de sortie résultat de la mise en œuvre de la fonction de traitement P. Lorsque n'importe quel format d'entrée est accepté, ceci est représenté par le caractère « * ».

Une fonction élémentaire $P_i$ est par exemple une fonction d'interception légale, une fonction de localisation, une fonction de marquage par filigrane, une fonction de transcodage, une fonction de cache, une fonction de translation d'adresse ou fonction NAT pour "Network Address Translation", une fonction d'inspection des paquets ou DPI pour "Deep Packet Inspection", une fonction de présence, une fonction de pont-conférence. Cette liste est bien entendu non exhaustive. Par la suite, cette chaîne de fonctions élémentaires est notée de la façon suivante :

$$(I_{MS},O_{MS})\sim (I,P_1,O)\sim (I,P_2,O)\sim ... (*,P_i,,O)\sim (I_{MC},O_{MC})$$

où MS représente le service et MC l'entité cliente.

Le procédé de détermination d'une chaîne de fonctions élémentaires dans un mode particulier de réalisation va maintenant être décrit en relation avec la figure 2.

Une phase de négociation préalable est mise en œuvre entre l'opérateur désireux d'offrir un accès au service et le fournisseur de service S et conduit à la définition d'un modèle de chaîne de traitement provisoire, appelé par la suite chaîne provisoire.

L'entité cliente N souhaitant accéder à un service S contacte dans un premier temps le portail P afin d'obtenir l'identifiant au service SID et des adresses de nœuds d'accès au service SBN. Puis, l'entité cliente N sélectionne un nœud d'accès au service SBN-1 et transmet une requête d'accès M1 au service S à ce nœud d'accès sélectionné. Cette requête d'accès

M1(SID,Cap, UserID) comprend un identifiant du service SID, des capacités Cap de l'entité cliente, un identifiant UserID de l'utilisateur de l'entité cliente.

La requête d'accès M1 est reçue par le nœud d'accès au service SBN-1 à une étape EI du procédé. Toujours dans cette étape E1, le nœud d'accès au service SBN-1 obtient une chaîne de fonctions élémentaires associée au service. Selon l'invention, cette chaîne est une chaîne provisoire, notée DTSID, qui a été déterminée entre le fournisseur de réseau et le fournisseur de service lors de la phase de négociation. Le nœud d'accès SBN-1 transmet alors un message M2 à l'entité de contrôle d'accès IF-OPAC. Le message M2(SID,DTSID,Cap,UserID) comprend les éléments du message M1 complétés de la chaîne provisoire de fonctions élémentaires.

Le message M2 est reçu par l'entité de contrôle d'accès IF-OPAC dans une étape F1. L'entité de contrôle d'accès IF-OPAC transmet alors à la base de données Pol-DB une requête M3, comprenant un identifiant du service SID et un contexte associé à l'entité cliente. Un contexte associé à l'entité cliente est par exemple un identifiant de l'utilisateur de l'entité cliente UserID, des capacités de l'entité cliente. Le contexte peut également être un type de réseau d'accès, obtenu par interrogation d'un serveur de sessions d'accès réseau ou CLF. Un tel serveur permet de collecter des informations sur les sessions utilisateur au niveau du réseau d'accès. Il enregistre notamment une association d'une adresse d'un terminal et d'informations de localisation géographique du réseau correspondantes, de caractéristiques sur l'accès (débit montant, débit descendant, caractéristiques physiques de la ligne). Une réponse M4 est reçue en provenance de la base de données BD-POL de règles, comprenant au moins une règle relative à l'entité cliente. La réponse M4 peut également comprendre des règles associées à l'opérateur du réseau de communication, des règles associées au service.

Dans une étape F2 de détermination d'actions à effectuer sur la chaîne provisoire, l'entité de contrôle d'accès IF-OPAC effectue dans un premier temps un contrôle d'une autorisation d'accès au service par l'entité cliente N. Si l'entité cliente n'est pas autorisée à accéder au service, la requête d'accès au service est rejetée. Ce rejet est transmis au nœud d'accès SBN-1 qui en notifie alors l'entité cliente.

Ce contrôle d'autorisation d'accès au service permet ainsi de rejeter de suite des entités clientes non autorisées, au lieu d'attendre une mise en œuvre effective du service. Ainsi les ressources du réseau de recouvrement, et donc du réseau de communication sous-jacent, sont économisées.

Si l'entité cliente est autorisée à accéder au service, toujours dans cette étape F2 du procédé, l'entité de contrôle d'accès IF-OPAC détermine une ou plusieurs actions à effectuer sur la chaîne provisoire en fonction des règles relatives au contexte associé à l'entité cliente.

Les actions susceptibles d'être effectuées sur la chaîne provisoire de fonctions élémentaires DTSID sont par exemple :

- ajout d'une fonction élémentaire après une autre fonction élémentaire ;
- suppression d'une fonction élémentaire ;
- remplacement d'une fonction élémentaire ;
- ajout d'une fonction élémentaire en fin de chaîne ;
- ajout d'une fonction élémentaire en début de chaîne.

L'entité de contrôle d'accès au service IF-OPAC peut ainsi déterminer à l'issue de cette étape F2 du procédé que :

- l'accès au service pour cette entité cliente n'est pas autorisé, en raison par exemple d'un contexte associé à l'entité cliente non compatible avec le service ;
- l'accès au service pour cette entité cliente est autorisé sans modification de la chaîne provisoire ;
- l'accès au service pour cette entité cliente est autorisé avec modification de la chaîne provisoire en fonction de ou des actions à effectuer déterminées lors de cette étape F2.

Si une ou plusieurs actions à effectuer ont été déterminées, lors d'une étape F3 de mise en œuvre de cette ou de ces actions, l'entité de contrôle d'accès IF-OPAC met en œuvre le ou les actions à effectuer sur la chaîne provisoire pour obtenir une chaîne définitive de fonctions élémentaires. La chaîne de fonctions élémentaires a ainsi été adaptée en fonction du contexte associé à l'entité cliente. Ainsi l'entité cliente N va pouvoir obtenir le service requis, même si ses contraintes n'étaient pas compatibles initialement avec celles du service. Ceci évite également de prévoir une pluralité de chaînes de fonctions élémentaires, chaque chaîne étant associée à un profil donné de l'entité cliente. Des échecs liés à une mauvaise sélection par l'entité cliente sont ainsi évités. Le service est adapté de façon autonome en fonction du contexte associé à l'entité cliente.

Si aucune action n'a été déterminée, la chaîne provisoire devient la chaîne définitive.

Dans tous les cas, toujours dans cette étape F3, l'entité de contrôle d'accès IF-OPAC transmet un message M5 de réponse au nœud d'accès au service SBN-1, comprenant la chaîne définitive de fonctions élémentaires à mettre en œuvre dans le réseau de recouvrement pour offrir le service à l'entité cliente.

Ces étapes F2 et F3 peuvent être effectuées en utilisant une spécification de langage telle que XACML, pour « eXtensible Access Control Markup Language ». Une telle spécification définit un langage pour le contrôle d'accès, la circulation de règles et l'administration de la politique de sécurité des systèmes d'information. Il est possible de générer en interne une demande d'autorisation "Authorization Request" pour chaque élément de la chaîne provisoire et d'obtenir en retour une réponse "Authorization Response" comprenant une ou des actions à effectuer déterminées en fonction des règles obtenues de la base de données BD-Pol. Ces messages de réponse sont alors traités lors de l'étape F3. De façon optionnelle, il est également possible

d'utiliser une telle spécification de langage pour certifier les informations transmises par l'entité cliente ou obtenues par un fournisseur d'identité tiers et sécuriser les transactions, tel que décrit dans l'article "Secure Stateless Trust Negotiation" de A. Klenk et al. publié à la conférence N2S 2009.

Une fois la chaîne définitive de fonctions élémentaires déterminée, des étapes telles que décrites dans l'article cité précédemment sont alors effectuées par le nœud d'accès au service SBN pour rechercher dans le réseau de recouvrement des nœuds proposant les fonctions élémentaires requises et tels que les liaisons entre les différents nœuds permettant de respecter les contraintes associées à la chaîne de fonctions élémentaires.

A titre d'exemple illustratif, la mise en œuvre d'un service de vidéo à l'aide d'un tel procédé va maintenant être décrite. Il est bien entendu que le procédé ne se restreint pas à cet exemple.

La phase de négociation entre le fournisseur du réseau de communication et le fournisseur d'un service vidéo de haute définition a conduit à l'enregistrement d'une chaîne de fonctions élémentaires provisoire dans le nœud d'accès au service SBN-1. Le service publié met à disposition un film F présentant les caractéristiques suivantes : Codec Audio/Vidéo H.264, Résolution HD, Bande passante vidéo 7Mb/S, Bande passante audio 256 kb/s, retard 500 m/s. Ces caractéristiques sont associées à un profil noté 200. Une entité cliente « alice@orange.fr » transmet une requête d'accès à ce service, comprenant ses propres caractéristiques. Celles-ci sont par exemple : Codec Audio/Vidéo MPEG-4, Résolution QCIF, Bande passante vidéo 200 kb/S, Bande passante audio 56 kb/s, retard 500 m/s. Ces caractéristiques sont associées à un profil noté 3000.

Le nœud d'accès au service SBN-1 transmet alors une requête M2 comprenant la chaîne provisoire de fonctions élémentaires : (alice@orange.fr, 3000) ~ (200,F).

L'entité de contrôle d'accès IF-OPAC vérifie lors de l'étape F2 que l'entité cliente N est bien autorisée à accéder au service puis détermine qu'une fonction de transcodage TC doit être ajoutée dans la chaîne provisoire. A l'issue de l'étape F3, la chaîne définitive est alors (alice@orange.fr, 3000)~(3000,TC,200)~(200,F).

On note qu'ainsi il n'est pas nécessaire de négocier pour chaque profil utilisateur possible, un contrat pour la fourniture d'un service. Une seule phase de négociation suffit, la chaîne provisoire issue de la négociation étant ensuite adaptée en fonction du contexte associé à l'entité cliente.

On souligne ici que la chaîne provisoire pour une entité cliente de profil 200 est directement la chaîne définitive.

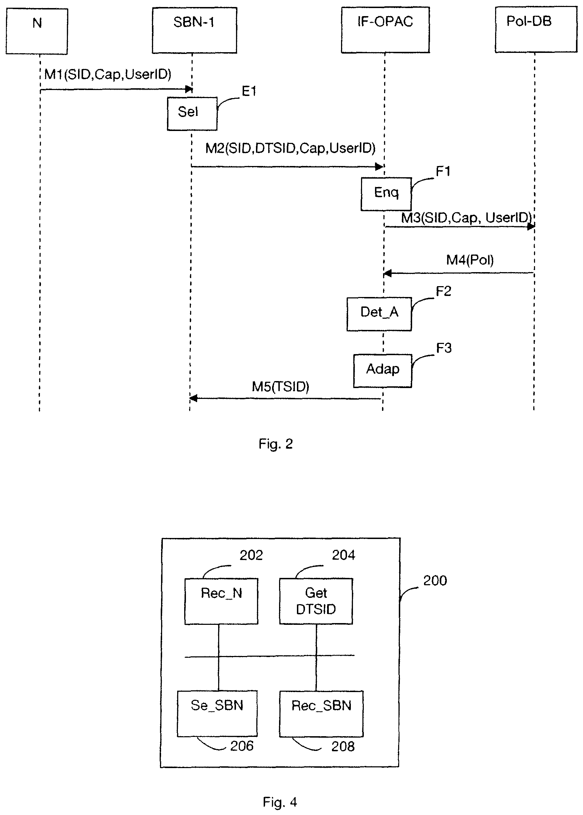

Un dispositif 100 de détermination d'une chaîne de fonctions élémentaires associée à un service va maintenant être décrit en relation avec la figure 3.

Un tel dispositif 100 comprend :

- un module 102 de réception en provenance d'un nœud d'accès au service d'une chaîne provisoire de fonctions élémentaires associée au service requis par une entité cliente et d'un contexte associé à l'entité cliente ;
- un module 104 de détermination d'une action à effectuer sur la chaîne provisoire en fonction du contexte associé à l'entité cliente ;
- un module 106 de mise en œuvre de l'action déterminée sur la chaîne provisoire pour obtenir une chaîne définitive ;
- un module 108 d'envoi audit nœud d'accès au service de la chaîne définitive.

Le module 104 est en outre agencé pour interroger la base de données BD-Pol pour un contexte associé à l'entité cliente et pour recevoir en retour au moins une règle relative à ce contexte.

Le dispositif 100 de détermination d'une chaîne de fonctions élémentaires est destiné à être intégré dans l'entité IF-OPAC de contrôle d'accès.

Un nœud SBN-1, SBN-N, 200 d'accès à un service tel que représenté sur la figure 4 comprend :

- un module 202 de réception en provenance d'une entité cliente d'une requête d'accès au service, ladite requête comprenant un contexte associé à l'entité cliente ;
- un module 204 d'obtention d'une chaîne provisoire de fonctions élémentaires associée audit service ;

- un module 206 d'envoi à un dispositif de détermination d'une chaîne de fonctions élémentaires d'une chaîne provisoire et d'un contexte associé à l'entité cliente ;
- un module 208 de réception dudit dispositif d'une chaîne définitive de fonctions élémentaires.

Les modules 202, 204, 206, 208 sont agencés pour mettre en œuvre le procédé de détermination d'une chaîne de fonctions élémentaires précédemment décrit. Il s'agit de préférence de modules logiciels comprenant des instructions logicielles pour faire exécuter les étapes du procédé de détermination précédemment décrit, mises en œuvre par le dispositif de détermination d'une chaîne de fonctions élémentaires. L'invention concerne donc aussi :

- un programme pour un dispositif de détermination d'une chaîne de fonctions élémentaires, comprenant des instructions de code de programme destinées à commander l'exécution des étapes du procédé de détermination précédemment décrit, lorsque ledit programme est exécuté par ledit dispositif ;
- un support d'enregistrement lisible par un dispositif de détermination d'une chaîne de fonctions élémentaires sur lequel est enregistré le programme pour un dispositif.

Les modules logiciels peuvent être stockés dans ou transmis par un support de données. Celui-ci peut être un support matériel de stockage, par exemple un CD-ROM, une disquette

magnétique ou un disque dur, ou bien un support de transmission tel qu'un signal électrique, optique ou radio, ou un réseau de télécommunication.

L'invention concerne également le système 1 de traitement d'une requête d'accès à un service par une entité cliente N comprenant au moins un nœud SBN-1,SBN-N,200 d'accès à un service et un dispositif IF-OPAC, 100 de détermination d'une chaîne de fonctions élémentaires associée à un service, tels que décrits précédemment.

## Revendications

1. Procédé de détermination d'une chaîne de fonctions élémentaires associée à un service, lesdites fonctions élémentaires étant destinées à être interconnectées en vue de la fourniture dudit service à une entité cliente (N) dans un réseau de recouvrement d'un réseau de communication, ledit procédé comprenant les étapes suivantes mises en œuvre par un dispositif (IF-OPAC, 100) de détermination :

   - une étape (F1) de réception en provenance d'un nœud d'accès audit service d'une chaîne provisoire de fonctions élémentaires associée au service requis par l'entité cliente et d'un contexte associé à l'entité cliente, ledit contexte ayant été transmis précédemment par l'entité cliente au nœud d'accès au service dans une requête d'accès audit service;
   - une étape (F2) de détermination d'une action à effectuer sur la chaîne provisoire de fonctions élémentaires associée au service en fonction d'au moins une règle relative au contexte associé à l'entité cliente ;
   - une étape (F3) de mise en œuvre de l'action déterminée sur la chaîne provisoire pour obtenir une chaîne définitive de fonctions élémentaires et d'envoi audit nœud d'accès au service de la chaîne définitive;
   - et une étape de recherche effectuée par ledit nœud d'accès au service, dans ledit réseau de recouvrement, des nœuds proposant des fonctions élémentaires requises et tels que les liaisons entre les différents nœuds permettent de respecter les contraintes associées à la chaîne de fonctions élémentaires.

2. Procédé selon la revendication 1, dans lequel ladite action à effectuer appartient au groupe comprenant au moins une suppression, un ajout, un remplacement.

3. Procédé selon la revendication 1, dans lequel le contexte associé à l'entité cliente appartient au groupe comprenant au moins un identifiant de l'utilisateur de l'entité cliente, un type de réseau d'accès, un type de terminal.

4. Procédé selon la revendication 1, comprenant une étape (F2) de contrôle d'une autorisation d'accès audit service par ladite entité cliente, l'étape de mise en œuvre de l'action déterminée étant exécutée lorsque l'entité cliente est autorisée à accéder au service.

5. Dispositif (100) de détermination d'une chaîne de fonctions élémentaires associée à un service, lesdites fonctions élémentaires étant destinées à être interconnectées en vue de la fourniture dudit service à une entité cliente dans un réseau de recouvrement d'un réseau de communication, ledit dispositif comprenant :

   - des moyens (102) de réception en provenance d'un nœud d'accès audit service d'une chaîne provisoire de fonctions élémentaires associée au service requis par l'entité cliente et d'un contexte associé à l'entité cliente, ledit contexte ayant été transmis précédemment par l'entité cliente au nœud d'accès au service dans une requête d'accès audit service ;

- des moyens (104) de détermination d'une action à effectuer sur la chaîne provisoire de fonctions élémentaires associée au service en fonction d'au moins une règle relative au contexte associé à l'entité cliente ;

- des moyens (106) de mise en œuvre de l'action déterminée sur la chaîne provisoire pour obtenir une chaîne définitive de fonctions élémentaires et des moyens (108) d'envoi audit nœud d'accès au service de la chaîne définitive ;

- des moyens de recherche, mis en œuvre dans ledit nœud d'accès (SBN-1, SBN-N, 200) au service, dans ledit réseau de recouvrement, des nœuds proposant des fonctions élémentaires requises tels que les liaisons entre les différents nœuds permettent de respecter les contraintes associées à la chaîne de fonctions élémentaires.

6. Dispositif de détermination, selon la revendication 5, où le nœud (SBN-1, SBN-N, 200) d'accès au service comprend en outre :

- des moyens (202) de réception en provenance d'une entité cliente d'une requête d'accès au service, ladite requête comprenant un contexte associé à l'entité cliente ;

- des moyens (204) d'obtention d'une chaîne provisoire de fonctions élémentaires associée audit service ;

- des moyens (206) d'envoi à un dispositif de détermination d'une chaîne de fonctions élémentaires d'une chaîne provisoire de fonctions élémentaires et d'un contexte associé à l'entité cliente ;

- des moyens (208) de réception dudit dispositif d'une chaîne définitive de fonctions élémentaires.

7. Système (1) de traitement d'une requête d'accès à un service par une entité cliente (N) comprenant au moins un nœud (SBN-1,SBN-N,200) d'accès à un service selon la revendication 6 et un dispositif (IF-OPAC, 100) de détermination d'une chaîne de fonctions élémentaires associée à un service selon la revendication 5.

8. Système de traitement d'une requête d'accès selon la revendication 7 comprenant en outre une base de données mémorisant au moins des règles relatives à des contextes associés à des entités clientes.

9. Programme d'ordinateur comportant des instructions pour la mise en œuvre du procédé de détermination d'une chaîne de fonctions élémentaires associée à un service selon la revendication 1 par un dispositif de détermination, lorsque ce programme est exécuté par un processeur.

**Patentansprüche**

1. Verfahren zur Bestimmung einer einem Dienst zugeordneten Kette elementarer Funktionen, wobei die elementaren Funktionen dazu bestimmt sind, zur Bereitstellung des Diensts für eine Client-Entität (N) in einem Overlay-Netzwerk eines Kommunikationsnetzes miteinander verbunden zu werden, wobei das Verfahren die folgenden Schritte enthält, die von einer Bestimmungsvorrichtung (IF-OPAC, 100) durchgeführt werden:

- einen Schritt (F1) des Empfangs, von einem Zugangsknoten zum Dienst kommend, einer dem von der Client-Entität angeforderten Dienst zugeordneten provisorischen Kette elementarer Funktionen und eines der Client-Entität zugeordneten Kontexts, wobei der Kontext vorher von der Client-Entität in einer Zugangsanforderung zum Dienst an den Zugangsknoten zum Dienst übertragen wurde;

- einen Schritt (F2) der Bestimmung einer an der dem Dienst zugeordneten provisorischen Kette elementarer Funktionen auszuführenden Aktion abhängig von mindestens einer Regel bezüglich des der Client-Entität zugeordneten Kontexts;

- einen Schritt (F3) der Durchführung der bestimmten Aktion an der provisorischen Kette, um eine endgültige Kette elementarer Funktionen zu erhalten, und des Sendens der endgültigen Kette an den Zugangsknoten zum Dienst;

- und einen vom Zugangsknoten zum Dienst in dem Overlay-Netzwerk durchgeführten Schritt der Suche der Knoten, die geforderte elementare Funktionen vorschlagen und derart sind, dass die Verbindungen zwischen den verschiedenen Knoten es ermöglichen, die der Kette elementarer Funktionen zugeordneten Bedingungen zu erfüllen.

2. Verfahren nach Anspruch 1, wobei die auszuführende Aktion zu der Gruppe gehört, die mindestens ein Löschen, ein Hinzufügen, ein Ersetzen enthält.

**3.** Verfahren nach Anspruch 1, wobei der der Client-Entität zugeordnete Kontext zu der Gruppe gehört, die mindestens eine Kennung des Benutzers der Client-Entität, einen Zugangsnetztyp, einen Endgerättyp enthält.

**4.** Verfahren nach Anspruch 1, das einen Schritt (F2) der Kontrolle einer Autorisierung des Zugangs zum Dienst durch die Client-Entität enthält, wobei der Schritt der Durchführung der bestimmten Aktion ausgeführt wird, wenn die Client-Entität autorisiert ist, auf den Dienst zuzugreifen.

**5.** Vorrichtung (100) zur Bestimmung einer einem Dienst zugeordneten Kette elementarer Funktionen, wobei die elementaren Funktionen dazu bestimmt sind, zur Bereitstellung des Diensts für eine Client-Entität in einem Overlay-Netzwerk eines Kommunikationsnetzes miteinander verbunden zu werden, wobei die Vorrichtung enthält:

- Einrichtungen (102) zum Empfang, von einem Zugangsknoten zum Dienst kommend, einer dem von der Client-Entität angeforderten Dienst zugeordneten provisorischen Kette elementarer Funktionen und eines der Client-Entität zugeordneten Kontexts, wobei der Kontext vorher von der Client-Entität in einer Zugangsanforderung zum Dienst an den Zugangsknoten zum Dienst übertragen wurde;
- Einrichtungen (104) zur Bestimmung einer an der dem Dienst zugeordneten provisorischen Kette elementarer Funktionen auszuführenden Aktion abhängig von mindestens einer Regel bezüglich des der Client-Entität zugeordneten Kontexts;
- Einrichtungen (106) zur Durchführung der bestimmten Aktion an der provisorischen Kette, um eine endgültige Kette elementarer Funktionen zu erhalten, und Einrichtungen (108) zum Senden der endgültigen Kette an den Zugangsknoten zum Dienst;
- im Zugangsknoten zum Dienst (SBN-1, SBN-N, 200) im Overlay-Netzwerk angewendete Sucheinrichtungen der Knoten, die erforderliche elementare Funktionen vorschlagen und derart sind, dass die Verbindungen zwischen den verschiedenen Knoten es ermöglichen, die der Kette elementarer Funktionen zugeordneten Bedingungen zu erfüllen.

**6.** Bestimmungsvorrichtung nach Anspruch 5, bei der der Zugangsknoten zum Dienst (SBN-1, SBN-N, 200) außerdem enthält:

- Einrichtungen (202) zum Empfang einer von einer Client-Entität kommenden Zugangsanforderung zum Dienst, wobei die Anforderung einen der Client-Entität zugeordneten Kontext enthält;
- Einrichtungen (204) zum Erhalt einer dem Dienst zugeordneten provisorischen Kette elementarer Funktionen;
- Einrichtungen (206) zum Senden einer provisorischen Kette elementarer Funktionen und eines der Client-Entität zugeordneten Kontexts an eine Bestimmungsvorrichtung einer Kette elementarer Funktionen;
- Empfangseinrichtungen (208) der Vorrichtung einer endgültigen Kette elementarer Funktionen.

**7.** System (1) zur Verarbeitung einer Zugangsanforderung zu einem Dienst durch eine Client-Entität (N), das mindestens einen Zugangsknoten zum Dienst (SBN-1,SBN-N,200) nach Anspruch 6 und eine Vorrichtung (IF-OPAC, 100) zur Bestimmung einer einem Dienst zugeordneten Kette elementarer Funktionen nach Anspruch 5 enthält.

**8.** System zur Verarbeitung einer Zugangsanforderung nach Anspruch 7, das außerdem eine Datenbank enthält, die mindestens Regeln bezüglich von Client-Entitäten zugeordneten Kontexten speichert.

**9.** Computerprogramm, das Anweisungen zur Durchführung des Bestimmungsverfahrens einer einem Dienst zugeordneten Kette elementarer Funktionen nach Anspruch 1 durch eine Bestimmungsvorrichtung aufweist, wenn dieses Programm von einem Prozessor ausgeführt wird.

**Claims**

**1.** Method for determining a chain of basic functions associated with a service, said basic functions being intended to be interconnected in order to supply said service to a client entity (N) in an overlay network of a communication network, said method comprising the following steps implemented by a determination device (IF-OPAC, 100):

- a step (F1) of reception, from an access node to said service, of a provisional chain of basic functions associated with the service requested by the client entity and of a context associated with the client entity, said context having been transmitted previously by the client entity to the service access node in a request for access to said service;

- a step (F2) of determination of an action to be performed on the provisional chain of basic functions associated with the service as a function of at least one rule relating to the context associated with the client entity;

- a step (F3) of implementation of the determined action on the provisional chain to obtain a definitive chain of basic functions and of sending of said definitive chain to said service access node;

- and a step of searching, performed by said service access node, in said overlay network, for the nodes offering requested basic functions and such that the links between the different nodes make it possible to observe the constraints associated with the chain of basic functions.

2. Method according to Claim 1, wherein said action to be performed belongs to the group comprising at least a deletion, an addition or a replacement.

3. Method according to Claim 1, wherein the context associated with the client entity belongs to the group comprising at least an identifier of the user of the client entity, a type of access network or a terminal type.

4. Method according to Claim 1, comprising a step (F2) of checking an authorization to access said service by said client entity, the step of implementation of the determined action being performed when the client entity is authorized to access the service.

5. A device (100) for determining a chain of basic functions associated with a service, said basic functions being intended to be interconnected in order to supply said service to a client entity in an overlay network of a communication network, said device comprising:

- means (102) for receiving, from an access node to said service, of a provisional chain of basic functions associated with the service requested by the client entity and of a context associated with the client entity, said context having been transmitted previously by the client entity to the service access node in a request to access said service;

- means (104) for determining an action to be performed on the provisional chain of basic functions associated with the service as a function of at least one rule relating to the context associated with the client entity;

- means (106) for implementing the determined action on the provisional chain to obtain a definitive chain of basic functions and means (108) for sending the definitive chain to said service access node;

- means for searching, implemented in said service access node (SBN-1, SBN-N, 200) in said overlay network, for the nodes offering requested basic functions such that the links between the different nodes make it possible to observe the constraints associated with the chain of basic functions.

6. Determination device, according to Claim 5, in which the service access node (SBN-1, SBN-N, 200) further comprises:

- means (202) for receiving, from a client entity, a service access request, said request comprising a context associated with the client entity;

- means (204) for obtaining a provisional chain of basic functions associated with said service;

- means (206) for sending to a determination device a chain of basic functions of a provisional chain of basic functions and a context associated with the client entity;

- means (208) for receiving, from said device, a definitive chain of basic functions.

7. System (1) for processing a request to access a service by a client entity (N) comprising at least one service access node (SBN-1, SBN-N, 200) according to Claim 6 and a device (IF-OPAC, 100) for determining a chain of basic functions associated with a service according to Claim 5.

8. System for processing an access request according to Claim 7, further comprising a database storing at least rules relating to contexts associated with client entities.

9. Computer program comprising instructions for implementing the method for determining a chain of basic functions associated with a service according to Claim 1 by a determination device, when this program is run by a processor.

Fig. 1

Fig. 3

| N | SBN-1 | IF-OPAC | Pol-DB |
|---|---|---|---|

M1(SID,Cap,UserID)

E1

Sel

M2(SID,DTSID,Cap,UserID)

F1

Enq

M3(SID,Cap, UserID)

M4(Pol)

F2

Det_A

F3

Adap

M5(TSID)

Fig. 2

202    204

Rec_N    Get DTSID

200

Se_SBN    Rec_SBN

206    208

Fig. 4

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **CHAN A T S et al.** MobiPADS: a reflective middleware for context-aware mobile computing. *IEEE TRANSACTIONS ON SOFTWARE ENGINEERING,* 01 Décembre 2003

- **A. KLENK et al.** Towards Autonomie Service Control In Next Generation Networks. *la conférence ICAS08*
- **A. KLENK et al.** Secure Stateless Trust Negotiation. *la conférence N2S,* 2009